# FASCICULE DE BREVET EUROPEEN

(11) **EP 4 557 528 B1**
(45) Date de publication et mention de la délivrance du brevet: **17.12.2025**
(21) Numéro de dépôt: 24212925.2
(22) Date de dépôt: 14.11.2024
(51) Int. Cl.: H01R 13/11, H01R 13/193

(54) **SOUS-ENSEMBLE DE CONTACT DE PUISSANCE À ACCOUPLEMENT SANS EFFORT, MODULE DE CONNEXION DE PUISSANCE INTÉGRANT UN TEL SOUS-ENSEMBLE POUR LE SERRAGE D'UNE TERMINAISON DE CÂBLE ÉLECTRIQUE**
KRAFTLOSE KUPPLUNGSLEISTUNGSKONTAKTBAUGRUPPE, LEISTUNGSANSCHLUSSMODUL MIT EINER SOLCHEN BAUGRUPPE ZUM KLEMMEN EINES STROMKABELABSCHLUSSES
POWER CONTACT SUBASSEMBLY WITH EFFORTLESS COUPLING, POWER CONNECTION MODULE INCORPORATING SUCH A SUBASSEMBLY FOR TIGHTENING AN ELECTRICAL CABLE TERMINATION

(30) Priorité: 16.11.2023 FR 2312555
(43) Date de publication de la demande: 21.05.2025
(73) Titulaire: Radiall, 93300 Aubervilliers (FR)
(72) Inventeur: DETILLEUL, Bastien, 33600 PESSAC (FR); BECAVIN, Patrice, 37110 AUZOUER EN TOURAINE (FR)
(74) Mandataire: Ipsilon

(56) Documents cités:
- CN-U- 211 404 771
- GB-A- 114 429
- US-B2- 10 903 596
- US-B2- 7 563 134

## Description

### Domaine technique

La présente invention concerne le domaine des connecteurs électriques de puissance.

Plus particulièrement, elle concerne les ensembles de connexion à borniers (« terminal blocks » en anglais) et plus particulièrement encore les contacts de puissance mis en œuvre dans ces ensembles.

Par « bornier », on entend ici et dans le cadre de la présente invention, un dispositif permettant d'assurer la continuité électrique entre un câble et une autre partie d'une installation. Un bornier, également connu sous le nom de borne de connexion ou borne à vis est un module isolé électriquement qui fixe ensemble deux fils/câbles électriques ou plus, destinés à être reliés électriquement entre eux, et comprend un support isolant et au moins un composant de serrage pour fixer les fils/câbles.

Par « contact », on entend ici et dans le cadre de la présente invention, un élément en matériau conducteur électrique pour laisser passer le courant électrique.

Bien que décrite en référence à un module de connexion d'une terminaison de câble électrique dans un ensemble de connexion à bornier, l'invention peut être mise en œuvre pour toute connexion électrique de puissance qui nécessite un accouplement sans effort entre contacts de puissance tout en garantissant une forte pression de contact une fois l'accouplement réalisé.

Également, bien que décrite en référence, à une application privilégiée, l'aéronautique, et plus particulièrement le câblage d'avions, l'invention peut être mise en œuvre dans toute autre application qui nécessite une connexion de puissance d'un grand nombre de câbles/fils électriques entre eux dans une zone de jonction.

### Technique antérieure

Une des opérations de câblage d'avions consiste à relier électriquement entre eux un grand nombre de câbles/fils électriques de puissance.

Cette opération est usuellement mise en œuvre en utilisant un bornier à vis, fixé à la structure de l'avion, et dans lequel la pluralité de câbles/fils électriques est insérée puis fixée par serrage.

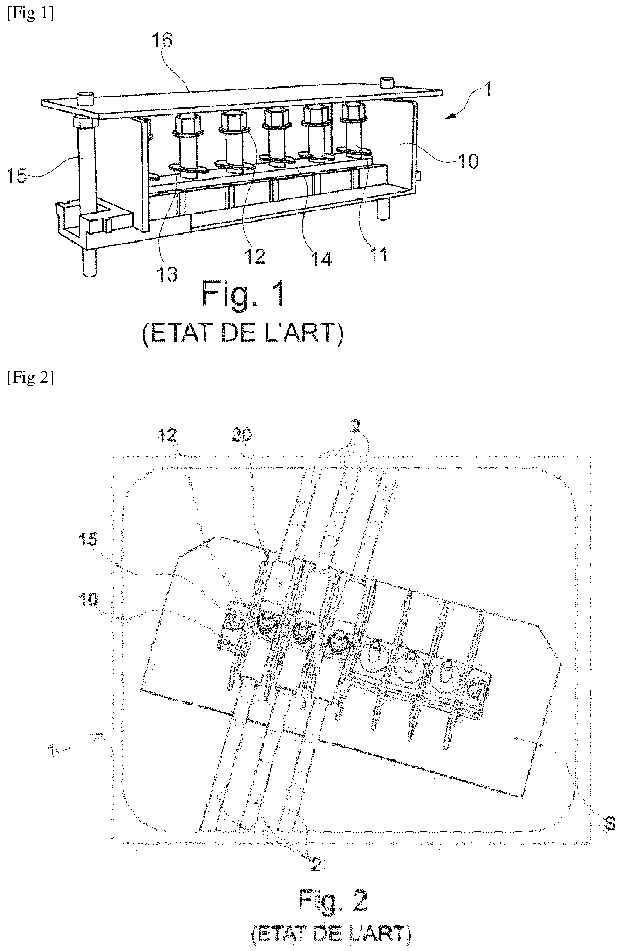

On a représenté en figures 1 et 2, un exemple d'un tel bornier existant, globalement désigné par la référence 1, qui est conçu pour relier deux ou plusieurs câbles 2 électriques équipés de cosses 20 à leurs extrémités par un système vis-écrou.

Ce bornier 1 comprend tout d'abord un support électriquement isolant 10 dans lequel sont fixés des vis de bornes 11 qui forment chacune avec un écrou 12 un système vis-écrou de serrage des cosses 20 équipant les câbles 2.

Une rondelle notamment électriquement conductrice 13, de type rondelle ondulée, est prévue pour chaque système vis-écrou.

Une barre électriquement conductrice 14 est traversée par chaque vis de bornes 11. Cette barre 14 forme une surface d'appui pour les cosses 20 de câbles et constitue ainsi un shunt électrique entre les câbles 2 à relier électriquement. Cette plaque 14 est optionnelle et chaque vis 11 est indépendante électriquement. De manière alternative, la plaque 14 peut ne s'étendre que sur une partie de longueur et ne connecter électriquement qu'une partie des vis.

Le support 10 est fixé à une structure S d'avion par des vis à colonnette 15.

Un capot 16 maintenu par les vis à colonnette 15 forme un capot de protection des systèmes vis-écrou 11, 12.

Le bornier 1 n'étant pas étanche, un capot supplémentaire appelé communément « parapluie » est fixé à la structure de l'avion, au-dessus du bornier pour empêcher l'humidité condensée de venir ruisseler directement sur les câbles 2 reliés dans le bornier.

Outre cet aspect non étanche, un tel bornier 1 à vis présente de nombreux inconvénients majeurs.

Tout d'abord, les cosses 20 doivent être parfaitement orientées pour être enfilées autour des vis de bornes 11 en vue d'une connexion électrique satisfaisante. Cela implique la plupart du temps pour un opérateur d'avoir à détorsader les câbles 2.

Le nombre de pièces à gérer (vis, écrous, rondelles, barre de shunt, capot, pièce parapluie) pour un opérateur en charge du montage est important avec, de surcroît, un risque élevé de pertes de pièces qui induit donc un risque de corps étranger, ou débris mécanique (FOD acronyme anglo-saxon pour « Foreign Object Damage ») pouvant causer des dommages, ce que l'on cherche absolument à éviter dans le domaine de l'aéronautique.

Ce risque de pertes de pièces est d'autant plus important que les zones dans lesquelles les borniers 1 existants sont mis en place ont un accès difficile et/ou très restreint et/ou une localisation gênante pour l'opérateur. Par exemple, le support isolant 10 est usuellement fixé du côté du plafond dans la structure d'un avion. Cela peut impliquer que les cosses installées sur les vis 11 ne tiennent pas en place avant d'avoir également mis en place un écrou 12. Autrement dit, il n'existe pas de fonction de pré-maintien en position des cosses sur les vis.

En plus des opérations intrinsèques de serrage par vis qui peuvent être longues pour un opérateur dédié, un autre opérateur est dédié systématiquement à la vérification de couples de serrage appliqués pour la fixation des cosses 20 des câbles.

Aussi, un bornier à vis nécessite de ne pas mettre les câbles sous tension pour éviter les risques électriques pour les opérateurs en charge de la connexion électrique. Ces risques ne peuvent d'ailleurs être complètement écartés lors de tests pour vérifier le bon fonctionnement.

Ainsi, au final, le temps d'installation d'un bornier à vis est long.

En outre, les cosses 20 peuvent nécessiter d'être orientées à 180°, ce qui est peu compatible avec des câbles de puissance qui sont rigides, typiquement d'un diamètre de l'ordre de AWG 000 (unité de mesure « American Wire Gauge »), soit de 10,4 mm.

Enfin, les borniers à vis ne permettent pas d'avoir une modularité car le nombre de câbles 2 qui peuvent être reliés dans un seul et même bornier est figé.

Pour améliorer les borniers existants, la Demanderesse a proposé dans la demande EP3758165 de brevet un ensemble de connexion qui permet d'apporter plus de modularité, de faciliter l'installation, plus particulièrement dans des zones d'accès restreint et/ou pour un nombre important de fils/câbles électriques à relier, et de protéger les opérateurs en charge de la connexion contre les risques électriques.

Bien que cette solution donne entière satisfaction, il existe encore un besoin d'amélioration des ensembles à bornier, notamment pour le passage de fortes intensités, typiquement jusqu'à 400 A qui implique une forte pression de contact et donc un effort de connexion élevé, et ce, sans qu'une usure prématurée des contacts apparaisse.

Le document GB114429 A propose un sous-ensemble de contact de puissance de type femelle selon le préambule de la revendication 1.

De manière plus générale, il existe un besoin de proposer une solution d'accouplement entre contacts de puissance, qui permette une forte pression de contact et donc un effort de connexion élevé, et ce, sans qu'une usure prématurée des contacts apparaisse.

L'invention vise à répondre à tout ou partie de ce(s) besoin(s).

### Exposé de l'invention

Pour ce faire, l'invention a pour objet, selon l'un de ses aspects, un sous-ensemble de contact de puissance de type femelle, comprenant :
- un contact de puissance femelle sous la forme d'une douille cylindrique, d'axe central (X2), comprenant :
   - un tube creux,
   - des bras flexibles de contact, dans le prolongement du tube creux et répartis angulairement en étant espacés, de préférence régulièrement, les uns des autres en formant des pétales, les pétales étant adaptés pour être défléchis depuis une position de repos dans laquelle un contact de puissance mâle peut être inséré entre eux, de préférence sans effort, jusqu'à une position défléchie dans laquelle le contact de puissance mâle est serré entre les pétales de sorte à établir une continuité électrique entre les contacts mâle et femelle ;
- une bague de serrage, montée coulissante autour de la douille pour défléchir les bras ;
- un mécanisme de déplacement de la bague pour déplacer la bague d'une première position correspondant à la position de repos des pétales à une deuxième position correspondant à la position défléchie des pétales, le mécanisme de déplacement étant adapté pour transformer un mouvement de pivotement, selon un axe perpendiculaire à l'axe central (X2) du contact, d'une pièce distincte et externe à la bague en un mouvement de translation de la bague ;
- un moyen élastique de rappel de position de la bague de sa première vers sa deuxième position.

Autrement dit, l'invention consiste essentiellement en un sous-ensemble avec un contact de puissance de type femelle constitué par une douille comprenant des bras flexibles, également sous la forme de pétales qui sont écartés suffisamment l'une de l'autre pour permettre une insertion sans effort mécanique d'un contact mâle cylindrique, une bague actionnée par un mécanisme de déplacement venant défléchir les bras flexibles, c'est-à-dire les serrer sur ce dernier pour garantir la continuité électrique, un moyen élastique exerçant un effort de maintien de la bague dans la position défléchie des bras flexibles, de serrage du contact mâle.

Selon un mode de réalisation avantageuse, le mécanisme de déplacement comprend:
- une fourche à au moins une branche, montée pivotante sur la bague, avec l'extrémité libre des branches en appui contre une butée externe,
- un levier ou une came de pivotement de la fourche pour translater la bague de la première position à la deuxième position et vice-et-versa.

Avantageusement, le moyen élastique de rappel est un ressort hélicoïdal de compression, monté autour de la bague et du contact de puissance femelle, avec une de ses extrémités longitudinales en butée contre une collerette extérieure de la bague et l'autre de ses extrémités longitudinales en butée contre une collerette extérieure du contact de puissance femelle ou contre une butée externe.

Selon une variante de réalisation avantageuse, chaque extrémité de pétale comprend une surface de verrouillage en saillie vers l'intérieur adaptée pour venir se loger dans une gorge périphérique du contact de puissance mâle, dans la position défléchie des pétales et ainsi verrouiller le déplacement axial des pétales, de préférence avant ou simultanément au serrage du contact mâle, la surface de verrouillage présentant une forme complémentaire à celle de la gorge périphérique du contact de puissance mâle.

Ainsi, le déplacement axial des pétales du contact femelle est verrouillé par leur surface intérieure qui vient se loger, de préférence avec compléments de forme, dans la gorge périphérique du contact mâle.

Selon une variante de réalisation avantageuse, le sous-ensemble comprend un isolant électrique comprenant :
- un tube creux logé à l'intérieur du tube creux du contact femelle,
- des nervures dans le prolongement du tube creux et réparties angulairement en étant espacées, de préférence régulièrement, les unes des autres en délimitant des ouvertures traversantes, chaque ouverture traversante logeant une pétale du contact femelle qui fait saillie vers l'extérieur au moins dans sa position de repos,
- un anneau reliant les nervures entre elles pour protéger mécaniquement l'extrémité frontale des pétales.

Les nervures permettent à la fois de guider et protéger mécaniquement les bras du contact femelle.

L'invention a également pour objet un module de connexion électrique, destiné à constituer une partie d'un bornier d'un ensemble de connexion, d'axe longitudinal (X) comprenant :
- au moins un corps en matériau électriquement isolant comprenant au moins une cavité s'étendant selon l'axe X et adaptée pour loger une terminaison de câble électrique, comprenant un manchon électriquement isolant et un contact de puissance mâle, de préférence cylindrique, retenu à l'intérieur du manchon, le contact étant destiné à être raccordé, de préférence serti sur un câble électrique;
- au moins un sous-ensemble tel que décrit précédemment, fixé dans la cavité avec les pétales du contact de puissance femelle adaptés pour serrer, dans leur position défléchie, le contact mâle de la terminaison électrique.

Avantageusement, la cavité loge une plaque formant la butée externe contre laquelle l'autre des extrémités longitudinales du ressort hélicoïdal est en butée.

Selon un mode de réalisation avantageux, le mécanisme de déplacement comprend:
- une pièce d'interface avec un outil (H) externe, montée libre en rotation dans un logement du corps et adaptée pour être mise en rotation par l'outil,
- une came de pivotement, solidaire ou réalisée intégralement avec la pièce d'interface, la rotation de la came provoquant le pivotement de la fourche, orthogonalement à l'axe X, qui fait translater la bague de la première position à la deuxième position et vice-et-versa.

Avantageusement, la pièce d'interface peut comprendre une empreinte d'interface avec l'outil, de préférence une empreinte hexagonale creuse.

Selon une variante de réalisation avantageuse, le corps du module et/ou la pièce d'interface comprend(nnent) au moins un indicateur visuel agencé de sorte à être visible par un opérateur pour lui indiquer la position du serrage correct du contact de la terminaison électrique. Le corps du module et/ou la pièce d'interface peu(ven)t ainsi comprendre, en tant qu'indicateur visuel une zone de couleur apparente.

Selon un mode de réalisation avantageux, le corps comprend une ouverture en regard de la cavité, munie intérieurement d'une pluralité de rainures droites longitudinales, de préférence réparties régulièrement angulairement, adaptées chacune pour recevoir une cannelure droite ménagée autour du manchon de la terminaison de câble électrique.

Les cannelures du manchon de la terminaison permettent une reprise des efforts de torsion du câble sur le corps du module. De plus, elles permettent d'empêcher la rotation du contact par glissement, une fois serré dans le module de connexion.

En choisissant des faibles secteurs angulaires entre cannelures, on obtient une insertion du contact dans le module qui n'exige pas d'indexation angulaire.

Selon un autre mode de réalisation avantageux, le module comprend une partie d'un dispositif de pré-verrouillage adaptée pour coopérer avec une autre partie du dispositif de pré-verrouillage, solidaire ou réalisée intégralement avec la terminaison du câble électrique, pour verrouiller le contact mâle de la terminaison dans sa position logée dans la cavité, avant serrage par les pétales du contact femelle. Avec un dispositif de pré-verrouillage, on garantit l'insertion dans une position correcte du contact mâle avant son serrage dans les pétales du contact femelle.

Selon ce mode et une première variante de réalisation, la partie du dispositif de pré-verrouillage comprend au moins une excroissance, ménagée à la périphérie extérieure d'un prolongement tubulaire du corps du module, l'autre partie du dispositif de pré-verrouillage comprenant au moins un ergot, ménagé à la périphérie intérieure d'une bague montée à rotation autour de la terminaison, la bague étant en appui axial contre une partie de la terminaison lorsque l'ergot est en butée axiale contre l'arrière de l'excroissance pour réaliser le pré-verrouillage.

Selon ce mode et une deuxième variante de réalisation, la partie du dispositif de pré-verrouillage comprend une pièce sensiblement en forme de U, montée coulissante sur un prolongement tubulaire du corps du module qui est muni deux ouvertures traversantes, l'autre partie du dispositif de pré-verrouillage comprenant au moins une gorge, ménagée à la périphérie extérieure d'une partie de la terminaison, la pièce étant dans une position de coulissement avec l'extrémité de ces branches formant des nervures logée dans la gorge de la terminaison pour réaliser le pré-verrouillage.

Selon une première configuration de connexion, le contact femelle comprend une portion s'étendant à l'extérieur du corps et adaptée pour être reliée électriquement par soudure ou vissage à un busbar.

Le module de connexion électrique peut également être dédié à une connexion entre harnais, c'est-à-dire entre au moins deux terminaisons de câble électrique, distincts.

Ainsi, selon une deuxième configuration de connexion, le module comprend :
- deux corps alignés ou côte à côte et fixés entre eux,
- deux contacts femelles reliés électriquement l'un à l'autre,
- deux mécanismes de déplacement indépendants l'un de l'autre. Ainsi, on peut relier au moins deux terminaisons de câble électrique en série au sein d'un même module.

Selon une variante de construction avantageuse, le module comprend une seule plaque contre laquelle l'autre extrémité de chacun des deux ressorts hélicoïdaux de compression est en butée axiale.

Selon une autre variante de construction avantageuse, les deux contacts femelles sont vissés l'un dans l'autre.

Selon ce deuxième mode et une variante de connexion entre une entrée de courant et trois sorties, on prévoit dans le module que:
- chaque corps comprend au moins deux cavités alignées ou non, les cavités s'étendant de préférence parallèlement à l'axe longitudinal (X) du module,
- les deux contacts femelles d'un même corps sont reliés électriquement entre eux, de sorte à réaliser un shunt électrique entre les au moins quatre terminaisons de câble électrique lorsque logées individuellement dans les cavités.

L'invention a également pour objet, un ensemble de connexion à bornier, comprenant une pluralité de modules de de dimensions identiques ou différentes avec des cavités de dimensions identiques ou différentes pour loger des terminaisons électriques de dimensions identiques ou différentes.

L'invention a enfin pour objet une structure, notamment d'aéronef, comprenant au moins un module de connexion électrique tel que décrits précédemment et/ou au moins un ensemble de connexion à bornier tel que décrit ci-avant, de préférence fixé(s) sur un rail-support, destiné lui-même à être fixé à la structure.

Les avantages de l'invention sont nombreux par rapport à l'existant parmi lesquels on peut citer :
- la suppression des problèmes d'orientation des câbles, qui peuvent être très rigides, en remplaçant les cosses usuelles par des contacts cylindriques ;
- une diminution des temps d'installation des câbles électriques dans une structure, notamment une structure d'aéronef par un système de montage rapide qui garantit un serrage efficace des terminaisons de câble, sans nécessité d'un serrage dit au couple, c'est-à-dire en appliquant une force de serrage spécifique en vue d'obtenir le maximum de précision;
- un accouplement individuel de chaque terminaison électrique dans un module de connexion mono ou multi cavités ;
- un accouplement sans effort puisque, avant serrage, l'écart entre les bras flexibles (pétales) du contact femelle permet une insertion aisée sans frottement du contact mâle, ce qui a en outre pour avantage de ne pas générer une usure du contact et/ou de son revêtement éventuel ;
- en corollaire de l'accouplement sans effort, une augmentation du nombre de cycles d'accouplement entre contacts mâle et femelle, une meilleure résistance à la corrosion, et la possibilité d'appliquer un revêtement de surface moins onéreux sur les contacts ;
- une forte pression de contact entre le contact électrique de la terminaison de câble et les bras flexibles (pétales) de contact au sein du module, ce qui réduit la résistance électrique de contact et donc permet un passage de courant fort avec un échauffement réduit ;
- une démultiplication de l'effort exercé par un opérateur sur le mécanisme de déplacement, soit directement, soit par l'intermédiaire d'un outil, permettant de comprimer facilement l'élément de rappel élastique, et donc, d'utiliser un élément de rappel élastique particulièrement rigide afin d'obtenir un effort de serrage important sur les bras flexibles de la douille ;
- une possibilité de connexion étanche au niveau de la cavité d'un module logeant les contacts;
- une possibilité d'indication à la fois visuelle (marquage sur le module en regard d'un indicateur sur la pièce d'interface) et sensitive (butée mécanique du contact de terminaison) du serrage correct du contact de terminaison dans le module ;
- la suppression dans une structure d'aéronef des pièces parapluies existantes grâce à la solution étanche avec modules de connexion qui loge de manière étanche les terminaisons électriques dans les cavités ;
- l'absence de risque de perte de pièce (FOD pour « Foreign Object Damage »), car la solution selon l'invention est sans pièce indépendante, détachable à installer ;
- une protection des opérateurs contre les risques électriques, du fait qu'ils n'ont plus qu'à manipuler directement des pièces isolantes électriques (modules et manchon isolant de terminaison) ;
- une grande modularité qui peut facilement s'adapter à différentes configurations de câblage ;
- le module de connexion est particulièrement adapté pour une ligne électrique à haute tension (plusieurs centaines de Volt), car il n'y a qu'un seul potentiel dans un module de connexion (phases et neutre sont séparés dans différents modules) et les lignes de fuite et d'isolement entre conducteurs électriques sont allongées.

Les applications envisagées pour un bornier avec des modules selon l'invention sont nombreuses parmi lesquelles on peut citer, le câblage des avions civils.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 représente en vue en perspective d'un exemple de bornier à vis selon l'état de l'art utilisé pour le câblage électrique dans les structures d'avion.
[Fig 2] la figure 2 est une autre vue en perspective d'un bornier à vis selon l'état de l'art montrant des harnais de câbles à cosses connectés dans le bornier;
[Fig 3] la figure 3 est une vue en perspective d'un sous-ensemble de contact de puissance femelle selon l'invention.
[Fig 4] la figure 4 est une vue en éclaté de la figure 3.
[Fig 5] la figure 5 est une vue en perspective d'un contact de puissance mâle à accoupler avec le contact femelle du sous-ensemble selon l'invention.
[Fig 6A], [Fig 6B] [Fig 6C] les figures 6A, 6B et 6C sont des vues en coupe longitudinale et en perspective montrant la position d'un contact de puissance mâle respectivement avant son insertion, avant serrage une fois inséré et après serrage avec verrouillage au sein d'un sous-ensemble de contact de puissance femelle selon l'invention.
[Fig 7] la figure 7 est une vue en perspective d'un module de connexion, à deux corps identiques fixés l'un à l'autre à cavités alignées logeant chacune un sous-ensemble selon l'invention et un contact mâle d'une terminaison de câble électrique accouplé au contact femelle d'un des sous-ensembles.
[Fig 8] la figure 8 est une vue en éclaté du module selon la figure 7 avec les deux terminaisons de câble électrique.
[Fig 9A], [Fig 9B] les figures 9A et 9B sont des vues en perspective partielle et en écorché au niveau du mécanisme de déplacement de la bague d'un sous-ensemble au sein d'un module, montrant respectivement une position avant insertion et serrage, et après insertion avec serrage du contact mâle d'une terminaison de câble électrique.
[Fig 10A], [Fig 10B] les figures 10A et 10B sont des vues de côté et en écorché au niveau du mécanisme de déplacement de la bague d'un sous-ensemble au sein d'un module, montrant respectivement une position après insertion et avant serrage, et après serrage du contact mâle d'une terminaison de câble électrique.
[Fig 11A], [Fig 11B] les figures 11A et 11B sont des vues en coupe longitudinale au niveau des contacts mâle et femelle au sein d'un module, correspondant respectivement aux figures 10A et 10B.
[Fig 12] la figure 12 est une vue en coupe longitudinale d'une variante avec étanchéité d'un module de connexion selon l'invention avec deux corps fixés entre eux logeant chacun un contact mâle d'une terminaison de câble électrique et un sous-ensemble de contact femelle selon l'invention.
[Fig 13] la figure 13 est une vue en perspective et coupe longitudinale d'une variante de réalisation d'un contact de puissance femelle selon l'invention.
[Fig 14] la figure 14 est une vue en perspective d'une première variante de réalisation d'un dispositif de pré-verrouillage d'une terminaison de câble électrique dans un sous-ensemble selon l'invention au sein d'un module de connexion.
[Fig 15] la figure 15 est une vue en perspective d'une deuxième variante de réalisation d'un dispositif de pré-verrouillage d'une terminaison de câble électrique dans un sous-ensemble selon l'invention au sein d'un module de connexion.
[Fig 16A], [Fig 16B] [Fig 16C] les figures 16A, 16B et 16C sont des vues en perspective montrant la position d'un contact de puissance mâle respectivement avant son insertion, avant serrage et avant pré-verrouillage avec la variante de la figure 15, une fois inséré avec indexation en rotation, et après serrage, pré-verrouillage et verrouillage au sein d'un sous-ensemble de contact de puissance femelle selon l'invention.
[Fig 17] la figure 17 est une vue en perspective et en écorché partiel d'un mode de réalisation d'un module de connexion avec deux corps logeant chacun deux cavités adjacentes, qui permet de réaliser une connexion électrique entre une terminaison de câble électrique en entrée et trois en sortie.
[Fig 18] la figure 18 est une vue en perspective et en écorché partiel d'un mode de réalisation d'un bornier à plusieurs modules de connexion connectés à un même busbar.

### Description détaillée

Dans l'ensemble de la présente demande, les termes « vertical », « inférieur », « supérieur », « bas », « haut », « dessous » et « dessus» sont à comprendre par référence par rapport à un module de connexion électrique en configuration fixé, notamment à un rail-support, en étant agencé à l'horizontal.

De même, les termes «interne» et «externe » sont à comprendre par rapport à un sous-ensemble selon l'invention, tel qu'intégré dans corps de module de connexion électrique.

De même, les termes « avant » et « arrière » sont à comprendre par rapport à l'extrémité de connexion d'un contact électrique selon l'invention. Ainsi, la partie avant d'un contact de puissance femelle d'un sous-ensemble selon l'invention est celle située au plus près de la partie d'accouplement d'un contact mâle complémentaire au contact femelle tandis que la partie arrière est celle située au plus loin.

Par souci de clarté, une même référence numérique est utilisée pour un même élément d'un câble électrique selon l'état de l'art et d'un câble électrique selon l'invention.

Les figures 1 et 2 ont déjà été décrites en détail en préambule. Elles ne seront donc pas commentées ci-après.

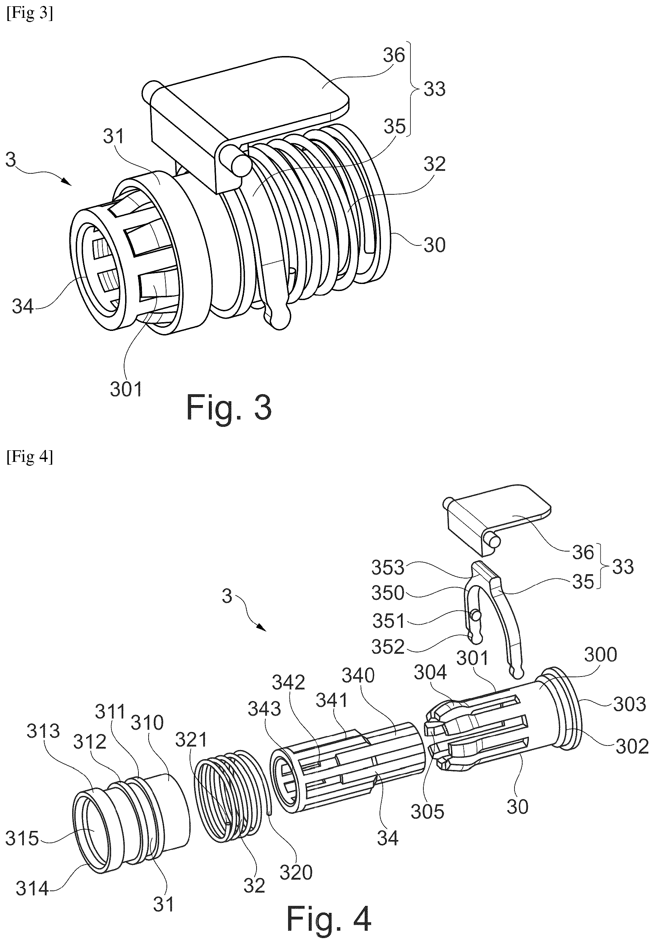

On a représenté sur les figures 3 et 4 un exemple de sous-ensemble de contact de puissance, globalement désigné par la référence 3.

Ce sous-ensemble 3 comprend un contact de puissance femelle sous la forme d'une douille cylindrique 30, qui comprend une partie arrière sous la forme essentiellement d'un tube au moins partiellement creux 300 et une partie avant sous la forme essentiellement de bras flexibles de contact 301 sous la forme de pétales, dans le prolongement du tube creux 300 et qui sont répartis angulairement en étant espacés, de préférence régulièrement, les uns des autres en formant des pétales. Dans l'exemple illustré, la douille 30 comprend huit bras flexibles 301 régulièrement espacés angulairement.

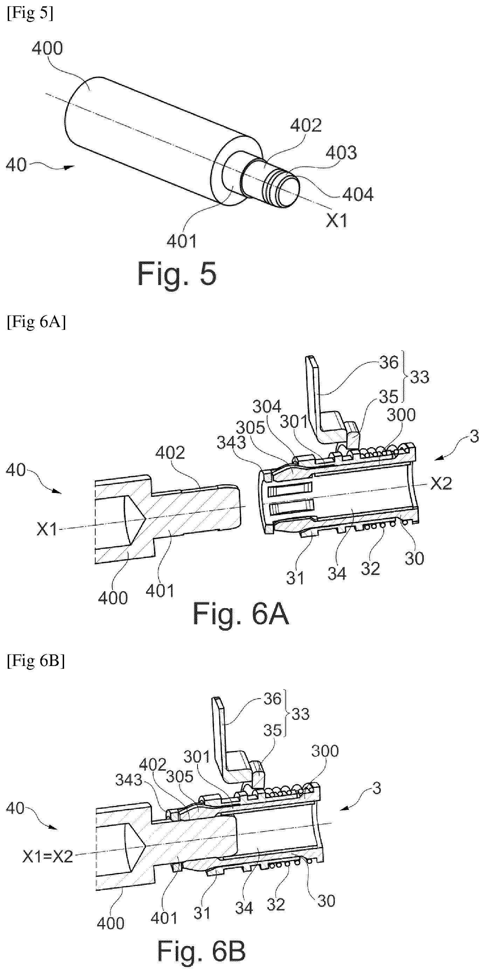

Comme détaillé par la suite, les bras flexibles 301 sont adaptées pour être défléchies depuis une position de repos dans laquelle un contact de puissance mâle 40, comme illustré à la figure 5, peut être inséré entre eux, de préférence sans effort, jusqu'à une position défléchie dans laquelle le contact de puissance mâle 40 est serré entre les bras flexibles 301 de sorte à établir une continuité électrique entre les contacts mâle et femelle.

Le sous-ensemble 3 comprend également une bague de serrage 31 montée coulissante autour de la douille 30 pour défléchir les bras 301.

Un mécanisme de déplacement 33 de la bague 31 permet de déplacer cette dernière d'une première position correspondant à la position défléchie des bras flexibles à une deuxième position correspondant à la position de repos des bras flexibles.

Le sous-ensemble 3 comprend enfin un ressort hélicoïdal de compression 32, monté coaxialement, de préférence autour de la bague 31 et du contact femelle 30, qui est un moyen élastique de rappel de position de la bague de sa deuxième vers sa première position.

Le cas échéant, le sous-ensemble 3 comprend un isolant électrique 34, qui comprend une partie arrière sous la forme d'un tube creux 340 logé à l'intérieur du tube creux 300 du contact femelle, et une partie avant sous la forme essentiellement de nervures 341 dans le prolongement du tube creux 300 et réparties angulairement en étant espacées, de préférence régulièrement, les unes des autres en délimitant des ouvertures traversantes 342.

Les nervures 341 permettent à la fois de guider et protéger mécaniquement les bras/pétales du contact femelle.

Chaque ouverture traversante 342 loge un pétale 301 du contact femelle qui fait saillie vers l'extérieur au moins dans sa position de repos.

Les différents composants du sous-ensemble sont décrits plus en détail dans un mode de construction avantageux.

Outre le tube creux 300, la partie arrière de la douille 30 comprend, dans le prolongement de ce dernier, une surépaisseur 302 et une collerette extérieure 303. La surépaisseur 302 permet de guider radialement le ressort hélicoïdal 32. La collerette extérieure 303 sert de butée à l'extrémité longitudinale arrière 320 du ressort 32.

Chaque extrémité de pétale 301 comprend une surface externe 304 qui forme la surface d'interférence mécanique avec la bague 31 et une surface interne 305, qui forme une face de contact électrique avec le contact mâle 40 et de préférence une surface de verrouillage, en saillie vers l'intérieur.

Un contact électrique de puissance de type mâle, de forme cylindrique 40, d'axe central X1, est représenté à la figure 5. Il comprend une partie arrière 400 pour le sertir à un conducteur électrique d'un câble et une partie avant de contact 401, de moindre diamètre que celui de la partie arrière 400.

La partie avant 401 est pourvue de préférence d'une gorge périphérique 402 qui permet le verrouillage du déplacement axial du contact femelle 30 du sous-ensemble relativement au contact mâle 40.

La partie avant 401 comprend également de préférence, à l'avant de la gorge périphérique, un chanfrein 403 prolongeant le cas échéant un rayon 404, qui permet le recentrage du contact mâle 40 lors de son insertion dans le contact femelle 30, et avantageusement la réduction des efforts d'insertion du contact 40 par glissement sur le chanfrein 403/rayon 404.

La surface de verrouillage 305 des pétales 301 est adaptée pour venir se loger dans la gorge périphérique 402 du contact de puissance mâle, dans la position défléchie des pétales et ainsi verrouiller le déplacement axial des pétales, de préférence avant ou simultanément au serrage du contact mâle.

De préférence, la surface de verrouillage 305 présente une forme complémentaire à celle de la gorge périphérique 402.

La bague de serrage 31 comprend un tube creux 310 dont la surface extérieure est pourvue de trois collerettes 311, 312, 313 espacées les unes des autres.

La collerette arrière 311 sert de butée à l'extrémité longitudinale avant 321 du ressort 32 et d'appui au téton de pivotement 351 du mécanisme d'actionnement, décrit ultérieurement.

La collerette intermédiaire 312 sert d'appui à un élément du mécanisme d'actionnement.

La collerette avant 313 permet de créer un chanfrein intérieur 314 prolongé par un dégagement intérieur 315. Le chanfrein intérieur 314 permet de défléchir vers l'intérieur les bras/pétales 301 du contact femelle 30 lors du déplacement de la bague 31. Le dégagement intérieur permet une réduction des contraintes mécaniques.

L'isolant électrique 34 peut comprendre un anneau 343 reliant les nervures 341 entre elles pour protéger mécaniquement l'extrémité frontale des pétales 301 et rigidifier les nervures 341 de l'isolant électrique.

Comme illustré aux figures 3 et 4, le mécanisme de déplacement 33 peut comprendre :
- une fourche 35 à au moins une branche 350, deux branches dans l'exemple illustré, montée pivotante sur la bague 31, avec l'extrémité libre des branches en appui contre une butée externe,
- un levier 36 de pivotement de la fourche pour translater la bague 31 de la première position à la deuxième position et vice-et-versa.

En particulier, un téton de pivotement 351 à l'intérieur d'une des branches 350 peut être en appui de pivotement contre les collerettes 311 et 312 de la bague 31.

On décrit maintenant en référence aux figures 6A à 6C un procédé d'insertion, d'accouplement et de verrouillage d'un contact mâle 40 dans un sous-ensemble de contact 3, tels qu'ils viennent d'être décrits.

On précise qu'au préalable de l'étape a/, le levier 36 a été actionné, c'est-à-dire qu'il a été mis en rotation pour passer d'une position horizontale à une position verticale. Cette rotation du levier 36 a fait pivoter la fourche 35 vers l'arrière, entraînant la compression du ressort 32 et le recul de la bague 31. Le recul de la bague amène les bras flexibles (pétales) 301 dans une position de repos. Le contact femelle 30 est alors prêt à être accouplé avec un contact mâle 40.

Etape a/: Tel qu'illustré à la figure 6A, le contact mâle 40 est approché en regard du contact femelle 30 en alignant leurs axes centraux X1, X2. Le mécanisme de déplacement 33 est actionné : le levier 36 est ainsi dans une position déployée vers l'extérieur. La bague 31 est dans une position reculée vers l'arrière. Le ressort 32 est dans son état comprimé entre le contact femelle 30 et la bague 31. Dans cette configuration, les pétales 301 du contact femelle 30 sont dans une position de repos, i.e. non défléchis.

Etape b/: Tel qu'illustré à la figure 6B, le contact mâle 40 est inséré librement, c'est-à-dire sans effort, dans le contact femelle 30 avec leurs axes centraux X1, X2 confondus. Le mécanisme de déplacement 33 est actionné : le levier 36 est ainsi dans une position déployée vers l'extérieur. La bague 31 est toujours dans sa position reculée vers l'arrière. Le ressort 32 est toujours dans son état comprimé entre le contact femelle 30 et la bague 31. Dans cette configuration, les pétales 301 du contact femelle 30 sont dans une position de repos, i.e. non défléchis.

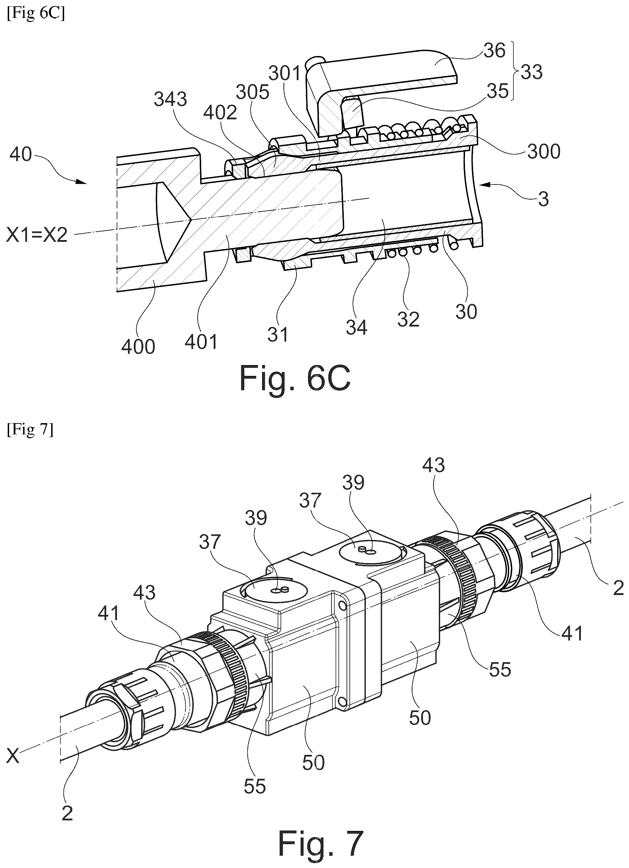

Etape c/: Tel qu'illustré à la figure 6C, le contact mâle 40 est inséré dans le contact femelle 30 avec leurs axes centraux X1, X2. Le mécanisme de déplacement 33 a été libéré et n'est plus actionné : le levier 36 est ainsi dans une position rabattue vers l'intérieur. La fourche 35 est inclinée vers l'avant du contact, avec une amplitude angulaire de pivotement limitée par la collerette 312. Par conséquent, la bague 31 est dans sa position avancée vers l'avant. Le ressort 32 est dans son état détendu entre le contact femelle 30 et la bague 31. Dans cette configuration, les pétales 301 du contact femelle 30 sont dans leur position défléchie et viennent serrer le contact mâle, et sont maintenues dans cette position par le ressort 32. Plus précisément, la surface intérieure 305 des pétales 301 est logée et en appui avec effort de serrage dans la gorge périphérique 402 du contact mâle 40. Les contacts mâle 40 et femelle 30 sont donc accouplés et verrouillés mutuellement.

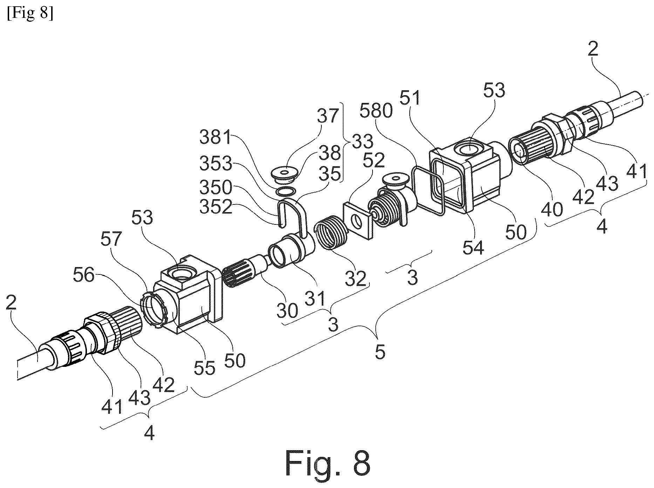

Les figures 7 et 8 illustrent un module de connexion électrique 5 selon l'invention, destiné à former une partie d'un bornier d'un ensemble de connexion, qui intègre deux sous-ensembles 3 de contact femelle selon l'invention. Ce module 5 permet de réaliser une connexion électrique entre une terminaison 4 de câble électrique 2 en entrée et une autre en sortie.

Ce module de connexion électrique 5 comprend deux corps 50, de préférence identiques, fixés l'un à l'autre. Les moyens de fixation entre les deux corps 50 ne sont pas représentés mais il peut s'agir de vis/écrous traversant de part en part les corps.

Chaque corps 50 est électriquement isolant d'axe longitudinal X, et destiné à loger, serrer et verrouiller et connecter au moins une terminaison 4 de câble électrique 2.

Plus précisément, chaque corps 50 comprend une cavité 51 en son sein et les deux cavités 51, de préférence de même taille, sont en regard l'une de l'autre dans chacune desquelles une terminaison 4 de câble électrique 2 est insérée, serrée et verrouillée, comme expliqué ci-après.

Une terminaison de câble électrique 4, d'axe central X1 comprend un manchon électriquement isolant 41 et un contact électrique de forme cylindrique serti 40 sur un câble électrique 2, inséré et fixé notamment par encliquetage, à l'intérieur du manchon 41.

Le manchon 41 comprend sur sa périphérie extérieure des cannelures droites 42 qui s'étendent autour de l'axe central X1 sur une partie de la longueur du manchon.

Le contact cylindrique 40 est identique à celui décrit en référence à la figure 5.

En outre, la terminaison de câble électrique 4 comprend une bague de pré-verrouillage 43, montée en rotation autour du manchon 41 et dont la fonction sera décrite ci-après

Dans chaque cavité 51 est fixé un sous-ensemble de contact femelle 3 tel que décrit en référence aux figures 3 et 4, à l'exception près que :
- le levier de déplacement 36 du mécanisme de déplacement 33 est remplacé par une pièce d'interface 37 avec un outil H externe et une came de déplacement 38 solidaire ou réalisée intégralement avec la pièce 37,
- l'extrémité longitudinale 320 du ressort 32 est en butée contre une plaque 52 fixée au sein d'un corps 50 de module.

Plus précisément, la pièce d'interface 37 avec un outil H est montée libre en rotation dans un logement 53 du corps et adaptée pour être mise en rotation par l'outil. La pièce d'interface 37 peut comprendre une empreinte d'interface 39 avec l'outil, de préférence une empreinte hexagonale creuse. Un opérateur peut ainsi utiliser un outil usuel, tel qu'une clef à pans hexagonaux.

Le pont 353 de la fourche 35 est en appui contre la came de pivotement 38 et l'extrémité libre 352 des branches 350 de la fourche est en appui contre une butée 54 interne au corps 50.

Dans le mode illustré, il y a une seule plaque 52 pour réaliser la butée des deux ressorts 32 de part et d'autre. Chaque sous-ensemble 3 a un mécanisme d'actionnement 37, 38 indépendant.

Par ailleurs, comme montré, le corps 50 comprend un prolongement tubulaire 55 avec une ouverture 56 en regard de la cavité 51,

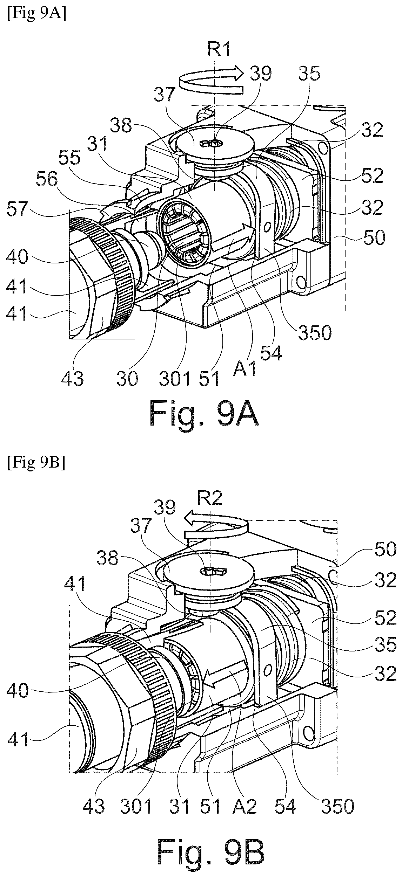

On décrit maintenant en référence aux figures 9A à 11B un procédé d'insertion, d'accouplement et de verrouillage d'un contact mâle 40 d'une terminaison 4 de câble 2 dans un module de connexion 5 à sous-ensembles de contact 3, tels qu'ils viennent d'être décrits.

Etape a1/: Tel qu'illustré à la figure 9A, avant ou pendant l'insertion du contact mâle 40 avec son manchon 41 dans l'ouverture 56, la pièce d'interface 37 et donc la came de déplacement 38 sont mises en rotation selon la flèche R1, ce qui provoque le pivotement de la fourche 35 autour de son point de pivotement 351 sur la bague 31 et en appui contre la butée 54 du corps 50 et, par-là le recul de bague 31 selon la flèche A1 et la compression du ressort 32. Le ressort 32 est donc dans son état comprimé entre la plaque 52 et la bague 31. La rotation de la came 38 permet de démultiplier l'effort exercé par l'opérateur sur la pièce d'interface 37, et donc de facilement comprimer le ressort 32. Dans cette configuration, les pétales 301 du contact femelle 30 sont dans une position de repos, i.e. non défléchis.

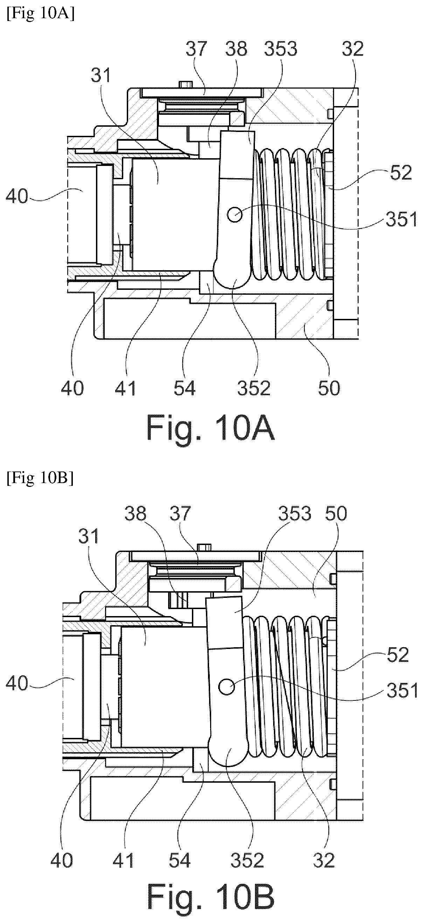

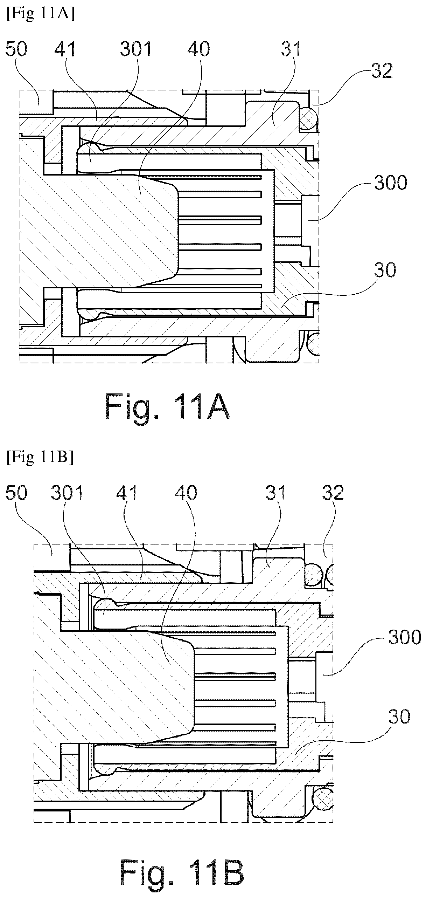

Etape b1/ : Le contact mâle 40 avec son manchon 41 est inséré dans l'ouverture 56. Le contact mâle 40 est inséré librement et sans effort mécanique entre les pétales 301 du contact femelle 30 Le ressort 32 est toujours dans son état comprimé entre la plaque 52 et la bague 31. La bague 31 est toujours dans sa position reculée vers l'arrière. Dans cette configuration, les pétales 301 du contact femelle 30 sont toujours à l'état de repos, i.e. non défléchis (figures 10A, 11A). Le manchon 41 vient s'emmancher, également sans effort mécanique, autour de la bague 31.

Etape c1/: Tel qu'illustré à la figure 9B, 10B, 11B, le contact mâle 40 est inséré dans le contact femelle 30. La pièce d'interface 37 et donc la came de déplacement 38 sont mises en rotation selon la flèche R2, dans le sens inverse à R1 ce qui provoque le pivotement de la fourche 35 en appui contre la butée 54 du corps 50 et, par-là l'avancée de bague 31 selon la flèche A2, dans le sens inverse à A1 et la détente du ressort 32. Le ressort 32 est donc dans son état détendu entre la plaque 52 et la bague 31.

Dans cette configuration, les bras flexibles 301 du contact femelle 30 sont dans une position défléchie. Le ressort 32 exerce un effort de maintien de la bague dans cette position. Les contacts mâle 40 et femelle 30 sont donc accouplés et verrouillés mutuellement.

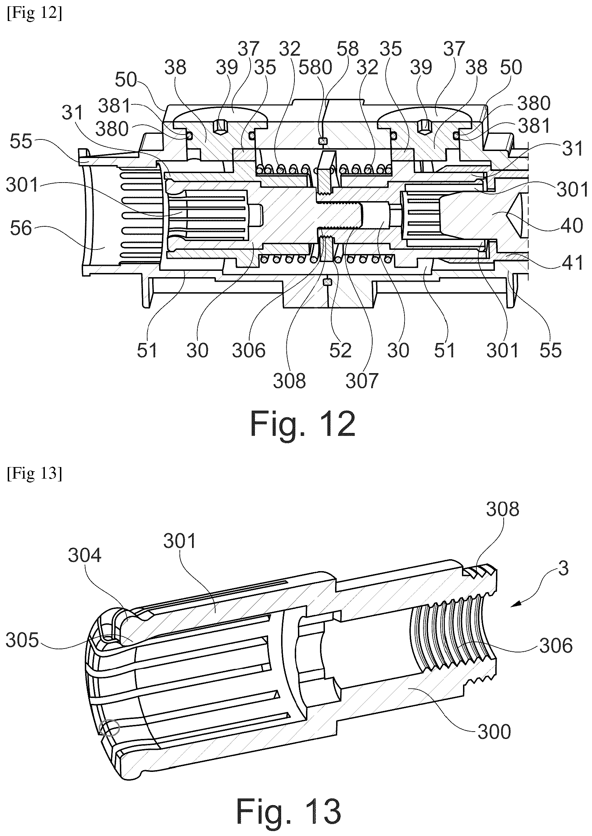

La figure 12 montre des variantes de construction avantageuses du module 5 qui vient d'être décrit, et qui permettent d'obtenir un module plus compact et plus robuste, avec en outre une très bonne continuité électrique.

La plaque 52 de butée des ressorts 32 est prise en sandwich entre les deux corps 50 du module.

Les deux contacts femelles 40 sont ici vissés l'un dans l'autre. Et un des contacts femelles 40 (celui de droite sur la figure 12) est vissé directement dans la plaque 52 de butée.

Pour ce faire comme montré à la figure 13, la partie tubulaire 300 d'un des contacts 30 est taraudée intérieurement avec un filet 306 adapté pour coopérer avec une queue filetée 307 de l'autre des contacts. La partie tubulaire 300 taraudée intérieurement est également filetée extérieurement avec un filet 308 qui est vissé directement dans la plaque 52.

Selon un mode supplémentaire, on peut prévoir une fonction de pré-verrouillage d'un contact mâle 40 dans un corps 50 d'un module 5, qui est réalisée une fois le contact 40 inséré mais avant la mise en rotation de la came 38 avec la bague 31 qui vient défléchir les pétales 301 du contact femelle 30. Avantageusement, cette fonction de pré-verrouillage est réalisable par un opérateur avec une seule main. Ce pré-verrouillage permet d'assurer un positionnement axial correct du contact mâle dans le contact femelle, préalablement au serrage et accouplement des deux contacts.

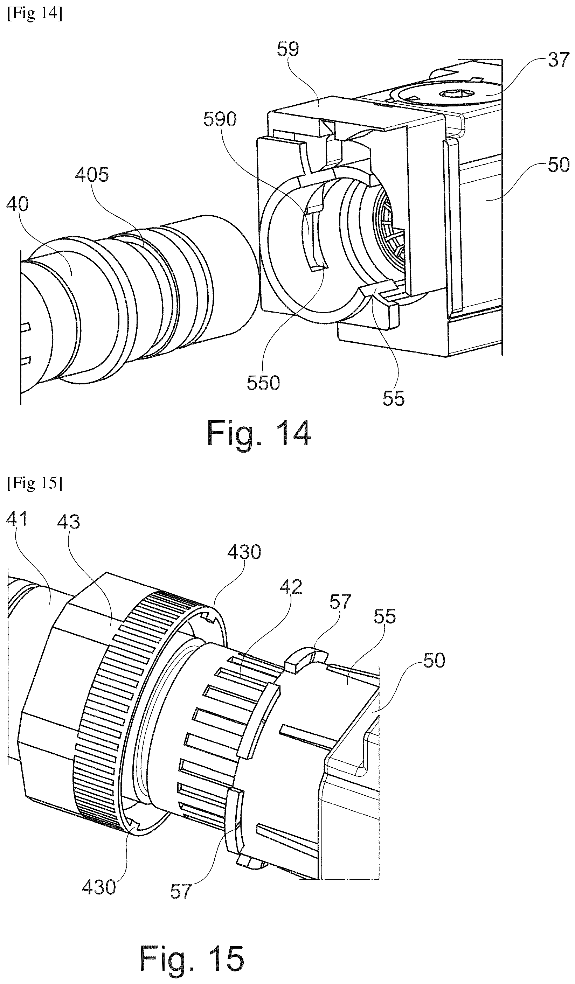

Une première variante d'un dispositif de pré-verrouillage est montrée à la figure 14. Une pièce 59 sensiblement en forme de U, dont les extrémités des branches 590 forment des nervures, est montée coulissante sur le prolongement tubulaire 55 du corps 50 du module. Le prolongement tubulaire 55 est muni de deux ouvertures traversantes 550 dans chacune desquelles une nervure 590 peut s'insérer. Une fois le contact 40 inséré dans le corps 50 du module, la pièce 59 est coulissée de sorte que l'extrémité de ses nervures 590 viennent se loger dans une gorge extérieure 405 du manchon 41 prévue à cet effet. Le contact 40 est ainsi bloqué en translation dans le corps 50, son pré-verrouillage est donc réalisé. Si le contact mâle 40 n'est pas correctement positionné axialement, il est impossible de faire coulisser la pièce 59, ce qui indique de manière visuelle et sensitive une mauvaise installation du contact 40.

Une deuxième variante d'un dispositif de pré-verrouillage est montrée à la figure 15. Au moins une excroissance 57, de préférence une pluralité, est ménagée à la périphérie extérieure du prolongement tubulaire 55 du corps 50 du module 5. Une bague 43 montée en rotation autour du manchon 41 de la terminaison 4 comprend au moins un ergot 430 ménagé à sa périphérie intérieure. Une fois le contact 40 inséré dans le corps 50 du module, la bague est en appui axial contre une partie de la terminaison et l'ergot 430 est en butée axiale contre l'arrière de l'excroissance 57. Le contact 40 est ainsi bloqué en translation dans le corps 50, son pré-verrouillage est donc réalisé.

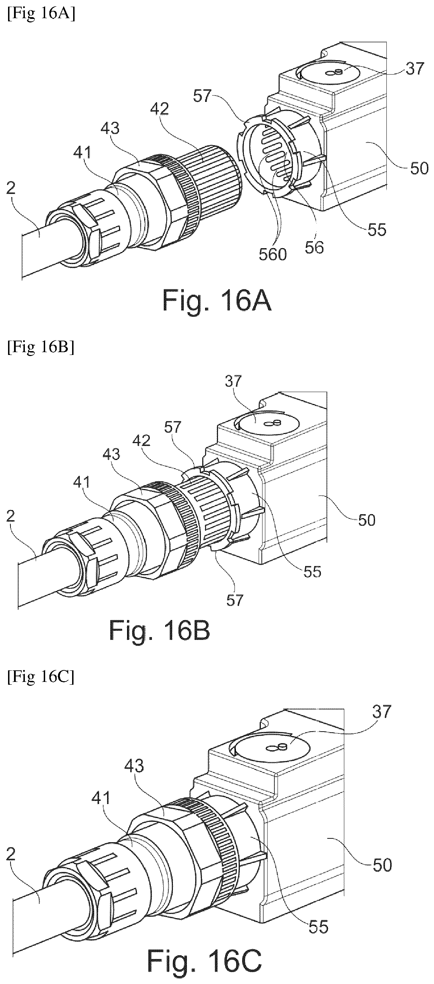

Comme montré en détail en figures 16A à 16C, on peut réaliser une partie du corps 50 de module et une terminaison de câble électrique 4 de sorte à bloquer en rotation cette dernière une fois son contact insérée dans une cavité 51.

L'ouverture 56 du corps en regard de la cavité 51 est ainsi munie intérieurement d'une pluralité de rainures droites longitudinales 560, de préférence réparties régulièrement angulairement, adaptées chacune pour recevoir une cannelure droite 42 ménagée autour du manchon 40 de la terminaison de câble électrique.

Les cannelures 42 permettent une reprise des efforts de torsion du câble 2 sur le corps du module 3 et également empêchent la rotation du contact 40 par glissement, une fois inséré et serré dans le module de connexion 5.

Les cannelures 42 sont de préférences faiblement espacées angulairement les unes des autres, ce qui permet une insertion du contact 40 dans le corps 50 du module, sans avoir à l'indexer en rotation au préalable.

La bague 43 de pré-verrouillage peut être mise en place une fois la rotation du contact 40 bloquée par les cannelures 42 (figure 16C).

Par ailleurs, on peut envisager une variante étanche de connexion entre le(s) contact(s) 40 de terminaison 4 et le(s) corps 50 de module.

Comme montré à la figure 8, cette variante peut par exemple consister à implanter au moins un passe-câble annulaire monté dans l'extrémité du manchon 41 à l'interface avec le câble 2.

Comme montré à la figure 12, on peut aussi prévoir un joint torique 580 à l'interface 58 entre deux corps 50 fixés entre eux.

En sus, on peut prévoir un joint torique 381 agencé autour de la pièce d'interface 38, dans son logement 380 (figure 12).

Les modules de connexion selon l'invention permettent différentes configurations de connexion entre harnais électrique à terminaison de câble électrique 4.

Comme décrit et illustré précédemment, un même module 5 peut comprendre deux corps 50, de préférence identiques, en regard et fixés l'un à l'autre. Cela permet une connexion électrique avec une entrée et une sortie unique.

D'autres configurations à plusieurs sorties sont possibles.

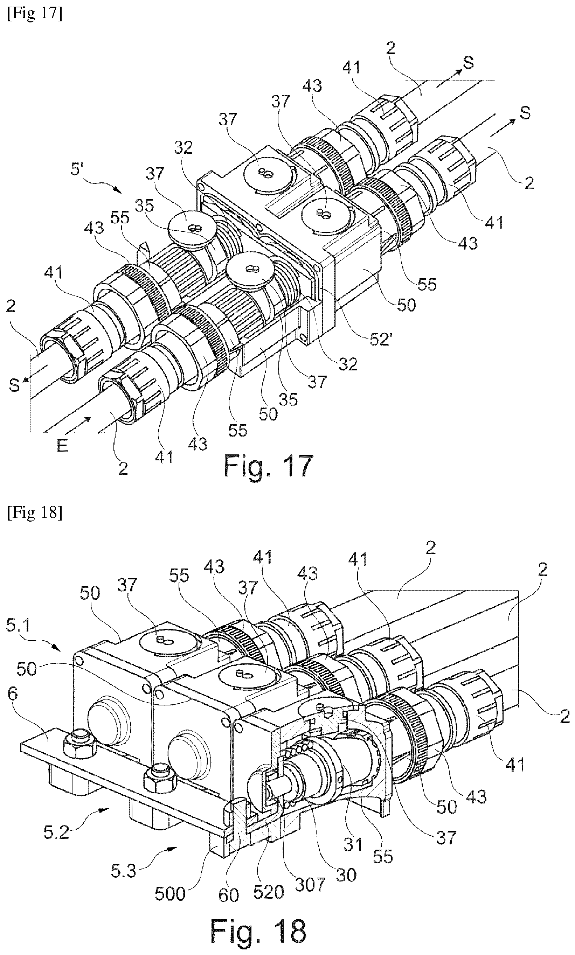

La figure 17 illustre une variante à une entrée électrique E et trois sorties électriques S avec un shunt électrique réalisé à l'intérieur des corps 50 d'un module de connexion 5'.

Plus précisément, comme montré sur cette figure 17, le module 5' comprend deux corps 50 alignés et fixés entre eux, chacun des corps 50 comprenant intérieurement deux cavités 51 s'étendant parallèlement à l'axe longitudinal (X) du module.

Alternativement, les deux corps peuvent être positionnés côte à côte et fixés entre eux.

Chaque contact 30 est serré au moyen d'un mécanisme de déplacement 37, 38 indépendant des autres. Le shunt électrique est réalisé par une unique plaque 52', en liaison électrique avec les quatre contacts femelles 30.

Une autre configuration possible avec des modules de connexion selon l'invention est une connexion de plusieurs terminaisons 4 de câble électrique 2 à un busbar ou barre de connexion.

Une telle configuration est illustrée à la figure 18 avec trois modules 5.1, 5.2, 5.3, de préférence identiques, agencés parallèlement les uns aux autres. Dans cette configuration illustrée, chaque corps 50 des modules comprend une seule cavité 51 dans laquelle est insérée et serrée un contact 40 d'une terminaison 4 de câble électrique 2.

Une plaque de butée 52 comprend une portion d'extension 520 qui s'étend à l'extérieur du corps 30.

Chaque corps 50 comprend un prolongement 500 de forme parallélépipédique droite, qui supporte une portion d'extension 520 de la plaque de butée 52.

Le contact femelle 30 comprend une queue 307 vissée dans la plaque de butée 52.

La connexion électrique parallèle entre les différentes contact femelles 30 et donc entre les terminaisons 4 électriques s'effectue par un busbar 6 commun qui est fixé au moyen d'un vis/écrou 60 dans la portion d'extension 520 de chaque plaque de butée 52. On peut bien entendu envisager en lieu et place des vis/écrous 60 une fixation par soudure au busbar.

D'autres variantes et améliorations peuvent être prévues sans pour autant sortir du cadre de l'invention.

On peut prévoir des modules de dimensions différentes avec un nombre de cavités différent pour loger des terminaisons de câble électrique 4 de tailles différentes.

On peut prévoir également une fixation et un verrouillage d'un module de connexion dans un rail-support.

Si dans l'exemple illustré de la variante de blocage en rotation de la terminaison, les rainures droites longitudinales sont réalisées dans le corps et le cannelures droites complémentaires sont portées par le manchon, on peut bien évidemment envisager l'inverse, c'est-à-dire avec les cannelures réalisées dans le corps et le manchon étant muni sur sa périphérie de rainures droites longitudinales.

L'expression « comportant un » doit être comprise comme étant synonyme de « comportant au moins un », sauf si le contraire est spécifié.

## Revendications

1. Sous-ensemble (3) de contact de puissance de type femelle, comprenant :
- un contact de puissance femelle sous la forme d'une douille cylindrique (30) d'axe central (X2), comprenant :
●un tube creux (300),
●des bras flexibles de contact (301), dans le prolongement du tube creux et répartis angulairement en étant espacés, de préférence régulièrement, les uns des autres en formant des pétales, les pétales étant adaptés pour être défléchis depuis une position de repos dans laquelle un contact de puissance mâle peut être inséré entre eux, de préférence sans effort, jusqu'à une position défléchie dans laquelle le contact de puissance mâle est serré entre les pétales de sorte à établir une continuité électrique entre les contacts mâle et femelle ;
- une bague de serrage (31), montée coulissante autour de la douille pour défléchir les bras ;
- un mécanisme de déplacement (33, 35, 36, 37, 38) de la bague pour déplacer la bague d'une première position correspondant à la position défléchie des pétales à une deuxième position correspondant à la position de repos des pétales,
- au moins une un moyen élastique de rappel (32) de position de la bague de sa deuxième vers sa première postion;
le sous-ensemble étant **caractérisé en ce que** le mécanisme de déplacement est adapté pour transformer un mouvement de pivotement, selon un axe perpendiculaire à l'axe central (X2) du contact, d'une pièce distincte et externe à la bague en un mouvement de translation de la bague.

2. Sous-ensemble (3) selon la revendication 1, le mécanisme de déplacement comprenant :
- une fourche (35) à branches, montée pivotante sur la bague, avec l'extrémité libre des branches (350) en appui contre une butée externe,
- un levier (36) ou une came (38) de pivotement de la fourche pour translater la bague de la première position à la deuxième position et vice-et-versa.

3. Sous-ensemble (3) selon la revendication 1 ou 2, le moyen élastique de rappel étant un ressort hélicoïdal de compression, monté autour de la bague et du contact de puissance femelle, avec une de ses extrémités longitudinales en butée contre une collerette extérieure de la bague et l'autre de ses extrémités longitudinales en butée contre une collerette extérieure du contact de puissance femelle ou contre une butée externe.

4. Sous-ensemble (3) selon l'une des revendications précédentes, chaque extrémité de pétale comprenant une surface de verrouillage (305) en saillie vers l'intérieur adaptée pour venir se loger dans une gorge périphérique du contact de puissance mâle, dans la position défléchie des pétales et ainsi verrouiller le déplacement axial des pétales, de préférence avant ou simultanément au serrage du contact mâle, la surface de verrouillage présentant une forme complémentaire à celle de la gorge périphérique du contact de puissance mâle

5. Sous-ensemble (3) selon l'une des revendications précédentes, comprenant un isolant électrique (34) comprenant :
- un tube creux (340) logé à l'intérieur du tube creux du contact femelle,
- des nervures (341) dans le prolongement du tube creux et réparties angulairement en étant espacées, de préférence régulièrement, les unes des autres en délimitant des ouvertures traversantes (342), chaque ouverture traversante logeant une pétale du contact femelle qui fait saillie vers l'extérieur au moins dans sa position de repos.
- un anneau (343) reliant les nervures entre elles pour protéger mécaniquement l'extrémité frontale des pétales.

6. Module de connexion électrique (5, 5' ; 5.1, 5.2, 5.3), destiné à constituer une partie d'un bornier d'un ensemble de connexion, d'axe longitudinal (X) comprenant:
- au moins un corps (50) en matériau électriquement isolant comprenant au moins une cavité (51) s'étendant selon l'axe X et adaptée pour loger une terminaison de câble électrique (4), comprenant un manchon (41) électriquement isolant et un contact de puissance mâle (40), de préférence cylindrique, retenu à l'intérieur du manchon, le contact étant destiné à être raccordé, de préférence serti sur un câble électrique (2) ;
- au moins un sous-ensemble (3) selon l'une des revendications précédentes, fixé dans la cavité avec les pétales du contact de puissance femelle adaptés pour serrer, dans leur position défléchie, le contact mâle de la terminaison électrique.

7. Module de connexion électrique selon la revendication 6, la cavité logeant une plaque (52) formant la butée externe contre laquelle l'autre des extrémités longitudinales du ressort hélicoïdal est en butée.

8. Module de connexion électrique selon la revendication 6 ou 7, le mécanisme de déplacement comprenant :
- une pièce d'interface (37) avec un outil (H) externe, montée libre en rotation dans un logement du corps et adaptée pour être mise en rotation par l'outil,
- une came de pivotement (38), solidaire ou réalisée intégralement avec la pièce d'interface, la rotation de la came provoquant le pivotement de la fourche, orthogonalement à l'axe X, qui fait translater la bague de la première position à la deuxième position et vice-et-versa.

9. Module de connexion électrique selon l'une des revendications 6 à 8, le corps comprenant une ouverture (56) en regard de la cavité, munie intérieurement d'une pluralité de rainures droites longitudinales (560), de préférence réparties régulièrement angulairement, adaptées chacune pour recevoir une cannelure droite (42) ménagée autour du manchon de la terminaison de câble électrique.

10. Module de connexion électrique selon l'une des revendications 6 à 9, comprenant une partie d'un dispositif de pré-verrouillage adaptée pour coopérer avec une autre partie du dispositif de pré-verrouillage, solidaire ou réalisée intégralement avec la terminaison du câble électrique, pour verrouiller le contact mâle de la terminaison dans sa position logée dans la cavité, avant serrage par les pétales du contact femelle.

11. Module de connexion électrique selon la revendication 10, la partie du dispositif de pré-verrouillage comprenant au moins une excroissance (57), ménagée à la périphérie extérieure d'un prolongement tubulaire (55) du corps du module, l'autre partie du dispositif de pré-verrouillage comprenant au moins un ergot (430), ménagé à la périphérie intérieure d'une bague (43) montée en rotation autour de la terminaison, la bague étant en appui axial contre une partie de la terminaison lorsque l'ergot est en butée axiale contre l'arrière de l'excroissance pour réaliser le pré-verrouillage.

12. Module de connexion électrique selon la revendication 10, la partie du dispositif de pré-verrouillage comprenant une pièce (59) sensiblement en forme de U, montée coulissante sur un prolongement tubulaire du corps du module qui est muni deux ouvertures traversantes (550), l'autre partie du dispositif de pré-verrouillage comprenant au moins une gorge (405), ménagée à la périphérie extérieure d'une partie de la terminaison, la pièce étant dans une position de coulissement avec l'extrémité de ces branches formant des nervures (590) logée dans la gorge de la terminaison pour réaliser le pré-verrouillage.

13. Module de connexion électrique selon l'une des revendications 6 à 12, le contact femelle comprend une portion s'étendant à l'extérieur du corps et adaptée pour être reliée électriquement par soudure ou vissage à un busbar (6).

14. Module de connexion électrique selon l'une des revendications 6 à 12, comprenant :
- deux corps alignés ou côte à côte et fixés entre eux,
- deux contacts femelles reliés électriquement l'un à l'autre,
- deux mécanismes de déplacement indépendants l'un de l'autre.

15. Module de connexion électrique selon la revendication 14 en combinaison avec la revendication 7, comprenant une seule plaque contre laquelle l'autre extrémité de chacun des deux ressorts hélicoïdaux de compression est en butée axiale.

16. Module de connexion électrique selon la revendication 14 ou 15, les deux contacts femelles étant vissés l'un dans l'autre.

17. Module de connexion électrique selon l'une des revendications 14 à 16, dans lequel :
- chaque corps comprend au moins deux cavités alignées ou non, les cavités s'étendant de préférence parallèlement à l'axe longitudinal (X) du module,
- les deux contacts femelles d'un même corps sont reliés électriquement entre eux, de sorte à réaliser un shunt électrique entre les au moins quatre terminaisons de câble électrique lorsque logées individuellement dans les cavités.

18. Ensemble de connexion à bornier, comprenant une pluralité de modules de connexion électrique (5.1, 5.2, 5.3) selon l'une des revendications précédentes, de dimensions identiques ou différentes avec des cavités de dimensions identiques ou différentes pour loger des terminaisons électriques de dimensions identiques ou différentes.

19. Structure, notamment d'aéronef, comprenant au moins un module de connexion électrique selon l'une des revendications 6 à 17 et/ou au moins un ensemble de connexion à bornier selon la revendication 18, de préférence fixé(s) sur un rail-support, destiné lui-même à être fixé à la structure.

## Patentansprüche

1. Leistungskontaktbaugruppe (3) vom Buchsentyp, umfassend:
- einen Leistungs-Buchsenkontakt in der Form einer zylindrischen Hülse (30) mit einer Mittelachse (X2), umfassend:
• ein hohles Rohr (300),
• flexible Kontaktarme (301) in der Verlängerung des hohlen Rohres, die winkelmäßig verteilt und dabei, vorzugsweise gleichmäßig, voneinander beabstandet sind, wobei sie blütenblattartige Ansätze bilden, wobei die blütenblattartigen Ansätze dazu eingerichtet sind, aus einer Ruheposition, in der ein Leistungs-Steckkontakt zwischen sie eingesetzt werden kann, vorzugsweise ohne Kraftaufwand bis in eine ausgelenkte Position ausgelenkt zu werden, in welcher der Leistungs-Steckkontakt zwischen den blütenblattartigen Ansätzen festgespannt ist, um so eine elektrische Kontinuität zwischen dem Steck- und dem Buchsenkontakt herzustellen;
- einen Spannring (31), der um die Hülse gleitend gelagert ist, um die Arme auszulenken;
- einen Verschiebemechanismus (33, 35, 36, 37, 38) des Ringes, um den Ring aus einer ersten Position, die der ausgelenkten Position der blütenblattartigen Ansätze entspricht, in eine zweite Position, die der Ruheposition der blütenblattartigen Ansätze entspricht, zu verschieben;
- mindestens ein elastisches Mittel zur Positionsrückstellung (32) des Ringes aus seiner zweiten in seine erste Position;
wobei die Baugruppe **dadurch gekennzeichnet ist, dass** der Verschiebemechanismus dazu eingerichtet ist, eine Schwenkbewegung eines von dem Ring verschiedenen und außerhalb von ihm befindlichen Teils entlang einer Achse, die zur Mittelachse (X2) des Kontakts senkrecht ist, in eine Translationsbewegung des Ringes umzuwandeln.

2. Baugruppe (3) nach Anspruch 1, wobei der Verschiebemechanismus umfasst:
- eine Gabel (35) mit Schenkeln, die schwenkbar an dem Ring angebracht ist, wobei das freie Ende der Schenkel (350) an einem äußeren Anschlag anliegt,
- einen Hebel (36) oder einen Nocken (38) zur Schwenkung der Gabel, um den Ring aus der ersten Position in die zweite Position und umgekehrt translatorisch zu bewegen.

3. Baugruppe (3) nach Anspruch 1 oder 2, wobei das elastische Rückstellmittel eine Schraubendruckfeder ist, die um den Ring und den Leistungs-Buchsenkontakt herum angebracht ist, wobei eines ihrer Längsenden an einem äußeren Flansch des Ringes anliegt und das andere ihrer Längsenden an einem äußeren Flansch des Leistungs-Buchsenkontakts oder an einem äußeren Anschlag anliegt.

4. Baugruppe (3) nach einem der vorhergehenden Ansprüche, wobei das Ende jedes blütenblattartigen Ansatzes eine nach innen vorstehende Verriegelungsfläche (305) umfasst, die dazu eingerichtet ist, in der ausgelenkten Position der blütenblattartigen Ansätze in einer Umfangsnut des Leistungs-Steckkontakts aufgenommen zu werden und somit die axiale Verschiebung der blütenblattartigen Ansätze zu verriegeln, vorzugsweise vor oder gleichzeitig mit dem Festspannen des Steckkontakts, wobei die Verriegelungsfläche eine Form aufweist, die zu derjenigen der Umfangsnut des Leistungs-Steckkontakts komplementär ist.

5. Baugruppe (3) nach einem der vorhergehenden Ansprüche, welche einen elektrischen Isolator (34) umfasst, der umfasst:
- ein hohles Rohr (340), das im Inneren des hohlen Rohres des Buchsenkontakts aufgenommen ist,
- Rippen (341) in der Verlängerung des hohlen Rohres, die winkelmäßig verteilt und dabei, vorzugsweise gleichmäßig, voneinander beabstandet sind, wobei sie Durchgangsöffnungen (342) begrenzen, wobei jede Durchgangsöffnung einen blütenblattartigen Ansatz des Buchsenkontakts aufnimmt, der mindestens in dessen Ruheposition nach außen vorsteht,
- einen Ring (343), der die Rippen miteinander verbindet, um das vordere Ende der blütenblattartigen Ansätze mechanisch zu schützen.

6. Elektrisches Verbindungsmodul (5, 5'; 5.1, 5.2, 5.3), welches dazu bestimmt ist, ein Teilstück einer Klemmleiste einer Verbindungsanordnung mit einer Längsachse (X) zu bilden, umfassend:
- mindestens einen Körper (50) aus elektrisch isolierendem Material, der mindestens einen Hohlraum (51) umfasst, der sich entlang der Achse X erstreckt und dazu eingerichtet ist, ein Stromleitungsende (4) aufzunehmen, das eine elektrisch isolierende Manschette (41) und einen vorzugsweise zylindrischen Leistungs-Steckkontakt (40) umfasst, der im Inneren der Manschette gehalten wird, wobei der Kontakt dazu bestimmt ist, an eine Stromleitung (2) angeschlossen, vorzugsweise auf sie aufgecrimpt zu werden;
- mindestens eine Baugruppe (3) nach einem der vorhergehenden Ansprüche, die in dem Hohlraum mit den blütenblattartigen Ansätzen des Leistungs-Buchsenkontakts befestigt ist, die dazu eingerichtet sind, in ihrer ausgelenkten Position den Steckkontakt des Stromleitungsendes festzuspannen.

7. Elektrisches Verbindungsmodul nach Anspruch 6, wobei der Hohlraum eine Platte (52) aufnimmt, die den äußeren Anschlag bildet, an dem das andere der Längsenden der Schraubenfeder anliegt.

8. Elektrisches Verbindungsmodul nach Anspruch 6 oder 7, wobei der Verschiebemechanismus umfasst:
- ein Schnittstellenteil (37) für ein externes Werkzeug (H), das frei drehbar in einer Aufnahme des Körpers gelagert ist und dazu eingerichtet ist, von dem Werkzeug gedreht zu werden,
- einen Schwenknocken (38), der mit dem Schnittstellenteil fest verbunden oder einstückig hergestellt ist, wobei die Drehung des Nockens die Schwenkung der Gabel orthogonal zur Achse X hervorruft, welche bewirkt, dass sich der Ring translatorisch aus der ersten Position in die zweite Position und umgekehrt bewegt.

9. Elektrisches Verbindungsmodul nach einem der Ansprüche 6 bis 8, wobei der Körper eine Öffnung (56) gegenüber dem Hohlraum umfasst, die innen mit mehreren geraden Längsnuten (560) versehen ist, die vorzugsweise gleichmäßig winkelmäßig verteilt sind und jeweils dazu eingerichtet sind, eine gerade Riffelung (42) aufzunehmen, die um die Manschette des Stromleitungsendes herum ausgebildet ist.

10. Elektrisches Verbindungsmodul nach einem der Ansprüche 6 bis 9, welches ein Teilstück einer Vorverriegelungsvorrichtung umfasst, das dazu eingerichtet ist, mit einem anderen Teilstück der Vorverriegelungsvorrichtung zusammenwirken, das mit dem Stromleitungsende fest verbunden oder einstückig hergestellt ist, um den Steckkontakt des Leitungsendes vor dem Festspannen durch die blütenblattartigen Ansätze des Buchsenkontakts in seiner in dem Hohlraum aufgenommenen Position zu verriegeln.

11. Elektrisches Verbindungsmodul nach Anspruch 10, wobei das Teilstück der Vorverriegelungsvorrichtung mindestens einen Vorsprung (57) umfasst, der am Außenumfang einer rohrförmigen Verlängerung (55) des Körpers des Moduls ausgebildet ist, während das andere Teilstück der Vorverriegelungsvorrichtung mindestens eine Nase (430) umfasst, die am Innenumfang eines Ringes (43) ausgebildet ist, der um das Leitungsende drehbar gelagert ist, wobei der Ring axial an einem Teilstück des Leitungsendes anliegt, wenn die Nase in axialer Anlage mit der Rückseite des Vorsprungs steht, um die Vorverriegelung herzustellen.

12. Elektrisches Verbindungsmodul nach Anspruch 10, wobei das Teilstück der Vorverriegelungsvorrichtung ein im Wesentlichen U-förmiges Teil (59) umfasst, das auf einer rohrförmigen Verlängerung des Körpers des Moduls gleitend gelagert ist, die mit zwei Durchgangsöffnungen (550) ausgestattet ist, während das andere Teilstück der Vorverriegelungsvorrichtung mindestens eine Nut (405) umfasst, die am Außenumfang eines Teilstücks des Leitungsendes ausgebildet ist, wobei das Teil sich in einer Gleitposition mit dem Ende dieser Rippen (590) bildenden Schenkel befindet, das in der Nut des Leitungsendes aufgenommen ist, um die Vorverriegelung herzustellen.

13. Elektrisches Verbindungsmodul nach einem der Ansprüche 6 bis 12, wobei der Buchsenkontakt einen Abschnitt umfasst, der sich außerhalb des Körpers erstreckt und dazu eingerichtet, durch Schweißen oder Verschrauben mit einer Sammelschiene (6) elektrisch verbunden zu werden.

14. Elektrisches Verbindungsmodul nach einem der Ansprüche 6 bis 12, umfassend:
- zwei zueinander ausgerichtete oder nebeneinander angeordnete und aneinander befestigte Körper,
- zwei Buchsenkontakte, die elektrisch miteinander verbunden sind,
- zwei Verschiebemechanismen, die voneinander unabhängig sind.

15. Elektrisches Verbindungsmodul nach Anspruch 14 in Kombination mit Anspruch 7, welches eine einzige Platte umfasst, an der das andere Ende jeder der zwei Schraubendruckfedern axial anliegt.

16. Elektrisches Verbindungsmodul nach Anspruch 14 oder 15, wobei die zwei Buchsenkontakte ineinandergeschraubt sind.

17. Elektrisches Verbindungsmodul nach einem der Ansprüche 14 bis 16, wobei:
- jeder Körper mindestens zwei zueinander ausgerichtete oder nicht ausgerichtete Hohlräume umfasst, wobei sich die Hohlräume vorzugsweise parallel zur Längsachse (X) des Moduls erstrecken,
- die zwei Buchsenkontakte ein und desselben Körpers elektrisch miteinander verbunden sind, um so einen elektrischen Shunt zwischen den mindestens vier Stromleitungsenden herzustellen, wenn diese einzeln in den Hohlräumen aufgenommen sind.

18. Verbindungsanordnung mit Klemmleiste, welche mehrere elektrische Verbindungsmodule (5.1, 5.2, 5.3) nach einem der vorhergehenden Ansprüche umfasst, von identischen oder unterschiedlichen Abmessungen mit Hohlräumen von identischen oder unterschiedlichen Abmessungen, um Stromleitungsenden von identischen oder unterschiedlichen Abmessungen aufzunehmen.

19. Struktur, insbesondere Luftfahrzeug, welche mindestens ein elektrisches Verbindungsmodul nach einem der Ansprüche 6 bis 17 und/oder mindestens eine Verbindungsanordnung mit Klemmleiste nach Anspruch 18 umfasst, die vorzugsweise auf einer Tragschiene befestigt ist (sind), die ihrerseits dazu bestimmt ist, an der Struktur befestigt zu werden.

## Claims

1. Power contact sub-assembly (3) of the female type, comprising:
- a female power contact in the form of a cylindrical socket (30) of central axis (X2), comprising:
• a hollow tube (300),
• flexible contact arms (301), which are in the continuation of the hollow tube and angularly distributed at a spacing, preferably regular spacing, from one another with the formation of petals, the petals being designed to be deflected from a rest position, in which a male power contact can be inserted between them, preferably effortlessly, to a deflected position, in which the male power contact is clamped between the petals so as to establish electrical continuity between the male and female contacts;
- a clamping collar (31), mounted slidingly around the socket for deflecting the arms;
- a displacement mechanism (33, 35, 36, 37, 38) for the collar for displacing the collar from a first position corresponding to the deflected position of the petals to a second position corresponding to the rest position of the petals;
- at least one elastic position-return means (32) for returning the collar from its second position to its first position;
the sub-assembly being **characterized in that** the displacement mechanism is designed to transform a pivoting movement, along an axis perpendicular to the centre axis (X2) of the contact, of a separate component external to the collar into a translational movement of the collar.

2. Sub-assembly (3) according to Claim 1, the displacement mechanism comprising:
- a branched fork (35) mounted pivotably on the collar, with the free end of the branches (350) bearing against an external stop,
- a fork-pivoting lever (36) or cam (38) for causing the collar to translate from the first position to the second position, and vice versa.

3. Sub-assembly (3) according to Claim 1 or 2, the elastic return means being a helical compression spring mounted around the collar and the female power contact, with one of its longitudinal ends in abutment against an outer flange of the collar and the other of its longitudinal ends in abutment against an outer flange of the female power contact or against an external stop.

4. Sub-assembly (3) according to one of the preceding claims, each petal end comprising an inwardly protruding locking surface (305) designed to be accommodated in a peripheral recess of the male power contact in the deflected position of the petals and thus lock the axial displacement of the petals, preferably before or at the same time as the clamping of the male contact, the locking surface having a complementary shape to that of the peripheral recess of the male power contact.

5. Sub-assembly (3) according to one of the preceding claims, comprising an electrical insulator (34) comprising:
- a hollow tube (340) accommodated inside the hollow tube of the female contact,
- ribs (341) that are in the continuation of the hollow tube and angularly distributed at a spacing, preferably regular spacing, from one another with delimitation of through-openings (342), each throughopening accommodating a petal of the female contact which protrudes outwards at least in its rest position,
- a ring (343), interconnecting the ribs, for mechanically protecting the front end of the petals.

6. Electrical connection module (5, 5'; 5.1, 5.2, 5.3) intended to form part of a terminal block of a connection assembly, of longitudinal axis (X) comprising:
- at least one body (50) made of electrically insulating material comprising at least one cavity (51) which extends along the axis X and is designed to accommodate an electric cable termination (4), comprising an electrically insulating sleeve (41) and a preferably cylindrical, male power contact (40) retained inside the sleeve, the contact being intended to be attached to, preferably crimped onto, an electric cable (2);
- at least one sub-assembly (3) according to one of the preceding claims, fixed in the cavity with the petals of the female power contact designed to clamp, in their deflected position, the male contact of the electric termination.

7. Electrical connection module according to Claim 6, the cavity accommodating a plate (52) forming the external stop against which the other of the longitudinal ends of the helical spring is in abutment.

8. Electrical connection module according to Claim 6 or 7, the displacement mechanism comprising:
- an interface component (37) which has an external tool (H), is freely rotatably mounted in a receiving portion of the body and is designed to be made to rotate by way of the tool,
- a pivoting cam (38) secured to or formed integrally with the interface component, the rotation of the cam causing the fork to pivot orthogonally to the axis X, which makes the collar translate from the first position to the second position, and vice versa.

9. Electrical connection module according to one of Claims 6 to 8, the body comprising an opening (56) which is next to the cavity and is provided on the inside with a plurality of longitudinal straight grooves (560), preferably distributed regularly and angularly, each designed to receive a straight spline (42) formed around the sleeve of the electric cable termination.

10. Electrical connection module according to one of Claims 6 to 9, comprising a part of a pre-locking device, this part being designed to interact with another part of the pre-locking device, this other part being secured to or formed integrally with the termination of the electric cable, for locking the male contact of the termination in its position accommodated in the cavity, before clamping by the petals of the female contact.

11. Electrical connection module according to Claim 10, the part of the pre-locking device comprising at least one protuberance (57), formed on the outer periphery of a tubular continuation (55) of the body of the module, the other part of the pre-locking device comprising at least one lug (430), formed on the inner periphery of a collar (43) mounted rotatably about the termination, the collar axially bearing against a part of the termination when the lug is in axial abutment against the rear of the protuberance to perform the pre-locking.

12. Electrical connection module according to Claim 10, the part of the pre-locking device comprising a substantially U-shaped component (59) slidingly mounted on a tubular continuation of the body of the module which is provided with two through-openings (550), the other part of the pre-locking device comprising at least one recess (405), formed on the outer periphery of one part of the termination, the component being in a sliding position with the end of its branches forming ribs (590) accommodated in the recess of the termination to perform the pre-locking.

13. Electrical connection module according to one of Claims 6 to 12, the female contact comprising a portion that extends out of the body and is designed to be electrically connected by welding or screwing to a busbar (6).

14. Electrical connection module according to one of Claims 6 to 12, comprising:
- two aligned or side-by-side bodies fixed to one another,
- two electrically interconnected female contacts,
- two displacement mechanisms independent of one another.

15. Electrical connection module according to Claim 14 in combination with Claim 7, comprising a single plate against which the other end of each of the two helical compression springs is in axial abutment.

16. Electrical connection module according to Claim 14 or 15, the two female contacts being screwed one in the other.

17. Electrical connection module according to one of Claims 14 to 16, in which:
- each body comprises at least two aligned or nonaligned cavities, the cavities extending preferably parallel to the longitudinal axis (X) of the module,
- the two female contacts of one and the same body are electrically interconnected, so as to produce an electric shunt between the at least four electric cable terminations when accommodated individually in the cavities.

18. Terminal block connection assembly, comprising a plurality of electrical connection modules (5.1, 5.2, 5.3) according to one of the preceding claims, of identical or different dimensions with cavities of identical or different dimensions for accommodating electric terminations of identical or different dimensions.

19. Structure, in particular for an aircraft, comprising at least one electrical connection module according to one of Claims 6 to 17 and/or at least one terminal block connection assembly according to Claim 18, preferably fixed on a rail support, which is itself intended to be fixed to the structure.
